**Europäisches Patentamt**

**European Patent Office**

**Office européen des brevets**

(19)

(11) Veröffentlichungsnummer : **0 303 157 B1**

(12) # EUROPÄISCHE PATENTSCHRIFT

(45) Veröffentlichungstag der Patentschrift :
**03.07.91 Patentblatt 91/27**

(51) Int. Cl.$^5$ : **A62D 3/00, B09B 3/00**

(21) Anmeldenummer : **88112530.6**

(22) Anmeldetag : **02.08.88**

(54) Verfahren zur Verfestigung wasserlöslicher Sonderabfälle.

(30) Priorität : **14.08.87 DE 3727145**

(43) Veröffentlichungstag der Anmeldung :
**15.02.89 Patentblatt 89/07**

(45) Bekanntmachung des Hinweises auf die
Patenterteilung :
**03.07.91 Patentblatt 91/27**

(84) Benannte Vertragsstaaten :
**BE CH DE ES FR GB LI SE**

(56) Entgegenhaltungen :
**EP-A- 0 168 638**
**EP-A- 0 226 880**
**DE-A- 3 131 697**

(73) Patentinhaber : **Nukem GmbH**
**Rodenbacher Chaussee 6 Postfach 11 00 80**
**W-6450 Hanau 11 (DE)**

(72) Erfinder : **Demmich, Jörg, Dr. Dipl.-Ing.**
**Wiesenstrasse 15**
**W-6464 Linsengericht 4 (DE)**
Erfinder : **Brähler, Georg, Dr. Dipl.-Chem.**
**Barbarossastrasse 15**
**W-6463 Freigericht 1 (DE)**
Erfinder : **Huschka, Hans, Dr. Dipl.-Chem.**
**Grünaustrasse 9**
**W-6450 Hanau 9 (DE)**

## Beschreibung

Die Erfindung betrifft ein Verfahren zur Verfestigung von Sonderabfällen aus Rauchgasreinigungsanlagen, die wasserlösliche und hygroskopische Stoffe enthalten, durch Vermischen mit hydraulischen Bindemitteln, Wasser und gegebenenfalls das Abbindeverhalten verbessernden Zusätzen, wie Natriumsulfid, zu rißfreien Deponiekörpern mit geringen, definierten Auslaugraten.

Eine Vielzahl von Sonderabfällen mit Anteilen von großer Wasserlöslichkeit, zum Beispiel Salze und Salzgemische, aus der Rauchgasreinigung, die zum Teil mit toxischen Schwermetallen belastet sind, müssen in Sonderabfalldeponien abgelagert werden, da eine stoffliche Wiederverwertung meist nicht möglich ist. Eine Ablagerung dieser Abfälle in Sonderabfalldeponien ohne Konditionierung und ohne Immobilisierung der Schadstoffe, zum Beispiel in Kunststoffsäcken, in Fässern oder in Kasetten aus Ton, ist keine zufriedenstellende Lösung, da ein absoluter Wasserabschluß nicht realisierbar und ein Wassereinbruch nicht auszuschließen ist. Die löslichen Bestandteile der Abfälle werden dann in kurzen Zeiträumen über das Sickerwasser ausgetragen. Ohne Sammlung und anschließende kostenintensive Nachbehandlung des Sickerwassers ist eine Gefährdung von Oberflächengewässern und von Grundwasser zu erwarten.

Sonderabfälle aus Rauchgasreinigungsanlagen enthalten normalerweise auch hygroskopische Bestandteile, meist in Form von Calciumchlorid.

Es besteht daher das Bestreben, diese Gefahren zu vermeiden. Als Problemlösung kommt in erster Linie eine Konditionierung der Sonderabfälle über eine Verfestigung in Frage, die eine Freisetzung der Schadstoffe für lange Zeiträume weitgehend verhindert und bei Auslaugung lediglich zu Eluatkonzentrationen führt, die unter den gesetzlichen Grenzwerten für eine direkte Einleitung in Oberflächengewässer oder in der Größenordnung der natürlichen Gehalte im Grundwasser liegen.

Um eine solche sichere übertägige Deponierung von wasserlöslichen Abfällen gewährleisten zu können, muß das endzulagernde Produkt (Deponiekörper) folgenden Hauptanforderungen genügen :

a) Immobilisierung der Schadstoffe, das heißt große Auslaugbeständigkeit und, wenn überhaupt, eine kontrollierte Freisetzung von Schadstoffen.

b) Alterungsbeständigkeit, das heißt die mechanische und chemische Integrität des Endproduktes muß in kurzer Zeit erreicht und über lange Zeit erhalten werden.

c) Wirtschaftlichkeit, das heißt große Abfallbeladungen im Endprodukt und einfaches Verfahrenskonzept.

Auf dem Gebiet der Konditionierung beziehungsweise Verfestigung von Sonderabfällen sind eine Vielzahl von Verfahren bekannt und zum Teil praktisch im Einsatz. Als Konditionierungsmittel dienen beispielsweise Zement, Wasserglas, Puzzolan, Kalk, Gips oder organische Polymere. Die Konditionierung weitgehend wasserlöslicher Sonderabfälle in Zement kommt praktisch nicht zum Einsatz, da der Sonderabfallgehalt im Zementprodukt in diesen Fällen durch die Beeinträchtigung des Erstarrungs- und Abbindeverhaltens auf relativ niedrige Werte begrenzt ist.

In der DD-PS 149 136 wird ein Verfahren zur Ab- und Endlagerung für eine Vielzahl von Abfällen beschrieben, die überwiegend mineralischen Ursprungs sind, geringe Wasserlöslichkeit besitzen und auch fast durchweg zementverträgliche Stoffe enthalten. Diese Abfälle werden einfach mit durch chemische Umsetzung erhärtenden oder thermoplastischen geschmolzenen Bindemitteln, wie Zement, Kalk, Gips oder Bitumen, gemischt und in den Deponieraum eingebracht. Besondere Maßnahmen zur Erhöhung der Auslaugbeständigkeit oder der Alterungsbeständigkeit werden nicht getroffen.

In der DE-OS 34 26 800 wird mit der Herstellung von versiegelten sphärischen Salz -/Zementkörpern, die in einer salzfreien Zementmatrix eingebettet werden, ein Verfahren aufgezeigt, das neben einer hohen Salzbeladung bis zu 50 Gew.-% im Endprodukt ein Barrierensystem zur Reduzierung der Auslaugfähigkeit und Erhöhung der Auslaugbeständigkeit besitzt. Nachteil dieses Verfahrens ist, daß zum Aufbau des Barrierensystems mehrere Verfahrensschritte durchgeführt werden müssen, die sich sowohl in den Investitions- als auch Betriebskosten niederschlagen.

In der Patentanmeldung DE-OS 35 45 592 wird ein Verfahren zur Konditionierung von wasserlöslichen Sonderabfällen durch Versetzen mit Zement, Wasser und Zusatzstoffen beschrieben, bei dem der Deponiekörper in einzelnen Schichten hergestellt und ein vertikaler wie horizontaler Salzkonzentrationsgradient von 0 bis 70% mit maximalen Salzgehalten in der Körpermitte und einer sonderabfallfreien Randschicht eingestellt wird.

Nachteile dieses Verfahrens sind die Verwendung eines komplizierten Gerätes sowie die hohen Salzkonzentrationen bei ebenfalls hohen Wasser/Zement-Werten in der Körpermitte, die zu einer geringen mechanischen Stabiliät führen und damit die Bruchgefahr des Deponiekörpers erhöhen.

Aus der DE-OS 35 18 411 ist ein Verfahren zur Deponierung von Rauchgasentschwefelungsprodukten bekannt, bei der diese mit puzzolanisch aktiver Flugasche, Calciumhydroxid und Wasser verfestigt wird.

Ein wesentlicher Nachteil bei allen bekannten Verfahren mit hydraulischen Bindemitteln ergibt sich dadurch, daß es nicht möglich ist, die Mischungsanteile von Wasser und hydraulischem Bindemittel so festzulegen, daß einerseits mit Sicherheit eine unkontrollierte Auslaugung von wasserlöslichen Salzen vermieden wird (zu hoher Wasser-Zement-Wert), andererseits eine zur Zerstörung des Deponiekörpers führende Rißbildung sicher ausgeschlossen werden kann (zu niedriger Wasser-Zement-Wert).

Es war daher Aufgabe der vorliegenden Erfindung, ein Verfahren zur Verfestigung von Sonderabfällen aus Rauchgasreinigungsanlagen zu entwickeln, die wasserlöslich und hygroskopische Stoffe enthalten, durch Vermischen mit hydraulischen Bindemitteln, Wasser und gegebenenfalls das Abbindeverhalten verbessernden Zusätzen, wie Natriumsulfid, zu rißfreien Deponiekörpern mit geringen, definierten Auslaugraten, wobei durch Vorausberechnung der notwendigen Mengen an hydraulischen Bindemitteln und Wasser möglichst geringe Auslaugeraten und möglichst wenige Risse im Deponieköroer erzielt werden sollten.

Diese Aufgabe wird erfindungsgemäß dadurch gelöst, daß die notwendigen Mengen an hydraulischen Bindemitteln (Z) und Wasser (W) in Gewichtsprozent nach folgenden Gleichungen bestimmt werden :

$$(1) \quad \frac{W}{Z + R_W} = \frac{1}{1 + R_W/Z} \cdot \frac{W_Z}{Z} + \frac{1}{1 + Z/R_W} \cdot \frac{W_{RW}}{R_W}$$

$$(2) \quad \frac{W_{RW}}{R_W} = A - B \cdot C_H$$

$$(3) \quad \frac{W_Z}{Z} = \text{const.}$$

$$(4) \quad W + Z + R = 100$$

mit folgenden Randbedingungen :

$$a) \quad 40 \leq R \leq 70$$

$$b) \quad 0 < R_W \leq 35$$

$$c) \quad 3{,}1 \leq A \leq 4{,}1$$

$$d) \quad 0{,}12 \leq B \leq 0{,}16$$

$$e) \quad 0 < C_H \leq 25$$

$$f) \quad (A - B \cdot C_H) > 0$$

wobei

$R$ = Menge der Sonderabfälle im Endprudukt
$R_w$ = Menge des wasserlöslichen Anteils der Sonderabfälle im Endprodukt
$W_z$ = Menge des benötigten Wassers für das hydraulische Bindemittel
$W_{RW}$ = Menge des benötigten Wassers für die wasserlöslichen Anteile der Sonderabfälle im Endprodukt
$C_H$ = Konzentration des hygroskopischen Anteils der Sonderabfälle (alles in Gewichtsprozent) bedeutet.

Bei Verwendung von Zement als hydaulischem Bindemittel werden vorzugweise für die Konstante $W_z/Z$ Werte zwischen 0,3 und 0,4 gewählt, bei Verwendung von Portlandzement ein Wert von 0,3.

Umfangreiche Untersuchungen mit unterschiedlichen Sonderabfällen aus Rauchgasreinigungsanlagen haben gezeigt, daß nicht, wie bisher üblich, allein der Wasser-Zement-Wert (also das Mengenverhältnis zwischen im Endprodukt vorhandenem Wasser und Zement) der für die Qualität des Deponiekörpers entscheidende Parameter ist, sondern eine zusätzliche spezifische Wassermenge, die sich auf den wasserlöslichen

3

Anteil im Sonderabfall bezieht, berücksichtigt werden muß.

Die in das Endprodukt einbringbare Menge an Sonderabfällen (R) muß empirisch bestimmt werden und beträgt je nach Art des Sonderabfalls zwischen 40 und 70%. Auch die Konstanten A und B müssen empirisch durch Versuche bestimmt werden, wobei unter dem hygrokopischen Anteil der Sonderabfälle die Salze umfasst werden, die vor dem Auflösen Wasser anlagern, zum Beispiel als Kristallwasser. Der Sonderabfall muß daher vor der Konditionierung analysiert werden.

Gemäß dieser Auswahlregel für die für eine bestimmte Menge von wasserlöslichen Verbindungen enthaltenden Sonderabfälle benötigten Mengen an hydraulischen Bindemitteln und Wasser, die anhand von Verfestigungsversuchen an unterschiedlichen wasserlöslichen Sonderabfällen, wie Rauchgasreinigungsrückstände (Salze, Salz-/Flugstaubgemische) aus einer Sonderabfallverbrennungsanlage (nasse, abwasserfreie Wäsche) und aus verschiedenen Müllverbrennungsanlagen (nasse, abwasserfreie Wäsche sowie trockene Wäsche) überprüft wurde, lassen sich mit einer kontinuierlich betriebenen Mischanlage, bestehend aus Vorlagebehälter und Dosiereinrichtungen für die beteiligten Feststoffe sowie einer geeigneten kontinuierlichen Mischeinrichtung Deponiekörper herstellen, die sich durch äußerst geringe, über Diffusionskoeffizienten berechenbare Auslaugraten für Chloride und alle Schwermetalle und eine für die übertägige Deponierung sehr gute mechanische Stabilität auszeichnen.

Folgende Beispiele sollen das erfindungsgemäße Verfahren näher erläutern :

1. Es wird ein Sonderabfall aus einer Rauchgasreinigungsanlage konditioniert, der 36 Gew.% wasserlöslichen Anteil, darunter 23 Gew. % hygroskopischer Anteil in Form von Calciumchlorid, enthält. Empirisch wurde gefunden, daß bei einem Anteil dieser Sonderabfälle von 50 Gew. % im Endprodukt gute Deponiekörper erhältlich sind. Als Konditionierungsmittel wird Portlandzement verwendet. Daraus ergibt sich :

$$R = 50, R_W = 18, C_H = 23, \frac{W_z}{Z} = 0{,}3.$$

Die Konstanten A und B wurden aus der Gleichung (2) für Portlandzement durch Versuche bestimmt :

$$A = 3{,}5 \text{ und } B = 0{,}15.$$

Aus den Gleichungen (1) bis (4) läßt sich die benötigte Zement-und Wassermenge berechnen :

$$Z = 37 \text{ Gew.\%}, W = 13 \text{ Gew.\%}, R = 50 \text{ Gew.\%}.$$

Werden pro Kilogramm dieses Sonderabfalls 370 g Portlandzement und 130 g Wasser dazugemischt, so erhält man Deponiekörper, die extrem auslaugbeständig und rißfrei sind.

2. Gemäß Beispiel 1 wird ein Sonderabfall konditioniert mit $R = 50$, $R_w = 18$ und $C_H = 23$. Mit $A = 3{,}64$ und $B = 0{,}14$ ergibt sich für $Z = 31\%$ und $W = 19\%$.

3. Gemäß Beispiel 1 wird ein Sonderabfall konditioniert mit $R = 50$, $R_w = 14$ und $C_H = 18$. Mit $A = 3{,}64$ und $B = 0{,}14$ errechnet sich aus den Gleichungen (1) bis (4) $Z = 25\%$ und $W = 25\%$.

4. Gemäß Beispiel 1 wird ein Sonderabfall konditioniert mit $R = 65$, $R_w = 13$ und $C_H = 19$. Mit $A = 3{,}64$ und $B = 0{,}14$ ergibt sich für $Z = 17\%$ und für $W = 18\%$.

Die nach diesen Beispielen berechneten Z- und W-Werte ergaben Deponiekörper, die extrem auslaugbeständig und rissfrei waren.

Ein allgemeines Rechenschema ergibt sich aus der folgenden Tabelle :

Tabelle:

| Vorgegeben : R | zu verfestigender |
| bekannt : $R_W$, $C_H$ | Sonderabfall |
| bekannt : A, B, const. (empirisch) | |

$$W = ?$$
$$Z = ?$$

Wie groß sind die optimalen Mengen an Wasser und Zement, um einen rißfreien Deponiekörper mit geringen, definierten Auslaugraten zu bekommen?

Vorgehensweise:

(1)  Gl.  (4) umformen

$$Z = 100 - W - R \quad (4a)$$

(2)  Gleichungen (2), (3) und (4a) in Gl. (1) einsetzen

(3)  Gl. (1) nach W auflösen

Lösung:

aus Gl. (1) :  $\underline{W} = \dfrac{1}{const.+1} \left[ const. (100 - R) + R_W (A - B \cdot C_H) \right] \quad (1a)$

Gl. (4a) :  $\underline{Z} = 100 - W - R$

mit W aus Gl. (1a)

**Ansprüche**

1. Verfahren zur Verfestigung von Sonderabfällen aus Rauchgasreinigungsanlagen, die wasserlösliche und hygroskopische Stoffe enthalten, durch Vermischen mit hydraulischen Bindemitteln, Wasser und gegebenenfalls das Abbindeverhalten verbessernden Zusätzen, wie Natriumsulfid, zu rißfreien Deponiekörpern mit geringen, definierten Auslaugraten, dadurch gekennzeichnet, daß die notwendigen Mengen an hydraulischen Bindemitteln (Z) und Wasser (W) in Gewichtsprozent nach folgenden Gleichungen bestimmt werden :

$$(1) \quad \frac{W}{Z + R_W} = \frac{1}{1 + R_W/Z} \cdot \frac{W_Z}{Z} + \frac{1}{1 + Z/R_W} \cdot \frac{W_{RW}}{R_W}$$

$$(2) \quad \frac{W_{RW}}{R_W} = A - B \cdot C_H$$

$$(3) \quad \frac{W_Z}{Z} = \text{const.}$$

$$(4) \quad W + Z + R = 100$$

mit folgenden Randbedingungen :

$$a) \quad 40 \leq R \leq 70$$
$$b) \quad 0 < R_W \leq 35$$
$$c) \quad 3,1 \leq A \leq 4,1$$
$$d) \quad 0,12 \leq B \leq 0,16$$
$$e) \quad 0 < C_H \leq 25$$
$$f) \quad (A - B \cdot C_H) > 0$$

wobei

$R$ = Menge der Sonderabfälle im Endprodukt
$R_w$ = Menge des Wasserlöslichen Anteils der Sonderabfälle im Endprodukt
$W_z$ = Menge des benötigten Wassers für das hydraulische Bindemittel
$W_{RW}$ = Menge des benötigten Wassers für die wasserlöslichen Anteilen der Sonderabfälle im Endprodukt
$C_H$ = Konzentration des hygroskopischen Anteils der Sonderabfälle (alles in Gewichtsprozent) bedeutet.

2. Verfahren nach Anspruch 1, dadurch gekennzeichnet, daß bei Verwendung von Zement als hydraulischem Bindemittel für die Gleichung (3) $\frac{W_z}{Z}$ = const. für die Konstante Werte zwischen 0,3 und 0,4 gewählt werden.

3. Verfahren nach Anspruch 2, dadurch gekennzeichnet, daß bei Verwendung von Pörtlandzement für die Gleichung (3) ein Wert von 0,3 gewählt wird.

## Claims

1. A process for the solidification of special waste from smoke cleaning plants which contains water-soluble and hygroscopic components by mixing with hydraulic binders, water and optionally additives which improve setting behaviour, such as sodium sulfide, to form crack-free waste-disposal blocks having low, defined wash-out levels, characterized in that the necessary quantities of hydraulic binders (Z) and water (W) in percent by weight are calculated in accordance with the following equations :

$$(1) \quad \frac{W}{Z + R_W} = \frac{1}{1 + R_W/Z} \cdot \frac{W_Z}{Z} + \frac{1}{1 + Z/R_W} \cdot \frac{W_{RW}}{R_W}$$

$$(2) \quad \frac{W_{RW}}{R_W} = A - B \cdot C_H$$

$$(3) \quad \frac{W_Z}{Z} = const.$$

$$(4) \quad W + Z + R = 100$$

with the following boundary conditions :

$$a) \quad 40 \leq R \leq 70$$

$$b) \quad 0 < R_W \leq 35$$

$$c) \quad 3.1 \leq A \leq 4.1$$

$$d) \quad 0.12 \leq B \leq 0.16$$

$$e) \quad 0 < C_H \leq 25$$

$$f) \quad (A - B \cdot C_H) > 0$$

where

$R$ = amount of special waste in the end product
$R_w$ = amount of water-soluble component of the special waste in the end product
$W_z$ = amount of water required for the hydraulic binder
$W_{RW}$ = amount of water required for the water-soluble components of the special waste in the end product
$C_H$ = concentration of the hygroscopic component of the special waste (all in percent by weight).

2. A process as claimed in claim 1, characterized in that, where cement is used as the hydraulic binder, values of 0.3 to 0.4 are selected for the constant in equation (3) $\frac{W_z}{Z}$ = const.

3. A process as claimed in claim 2, characterized in that, where Portland cement is used, a value of 0. 3 is selected for equation (3).

## Revendications

1. Procédé pour la solidification de déchets spéciaux provenant d'installation de purification de gaz de fumée, qui contiennent des matières solubles dans l'eau et hygroscopiques, en les mélangeant avec des liants hydrauliques, de l'eau et le cas échéant des produits additionnels améliorant le comportement au durcissement, comme le sulfure de sodium, pour constituer des corps sans fissures avec des taux de lessivage définis et faibles, caractérisé en ce que les quantités nécessaires de liants hydrauliques (Z) et d'eau (W) en pourcentage de poids sont déterminées d'après les équations suivantes :

$$(1) \quad \frac{W}{Z + R_W} = \frac{1}{1 + R_W / Z} \cdot \frac{W_z}{Z} \cdot \frac{1}{1 + Z/R_W} \cdot \frac{W_{RW}}{R_W}$$

$$(2) \quad \frac{W_{RW}}{R_W} = A - B \cdot C_H$$

$$(3) \quad \frac{W_z}{Z} = const.$$

$$(4) \quad W + Z + R = 100$$

(avec les conditions de marges suivantes) :

$$a) \quad 40 \leq R \leq 70$$

$$b) \quad 0 < R_w \leq 35$$

$$c) \quad 3,1 \leq A \leq 4,1$$

$$d) \quad 0,12 \leq B \leq 0,16$$

$$e) \quad 0 < C_H \leq 25$$

$$f) \quad (A - B \cdot C_H) > 0$$

dans lesquelles

$R$ = la quantité de déchets spéciaux dans le produit final,

$R_w$ = la quantité de la quote-part soluble dans l'eau de déchets spéciaux dans le produit final,

$W_z$ = la quantité d'eau nécessaire pour le liant hydraulique,

$W_{RW}$ = la quantité d'eau nécessaire pour les portions solubles dans l'eau des déchets spéciaux dans le produit final,

$C_H$ = la concentration de la quote-part hygroscopique des déchets spéciaux, tout est indiqué en pourcentage de poids

2. Procédé selon la revendication 1, caractérisé en ce que dans l'utilisation de ciment comme liant hydraulique, pour l'égalité (3) :

$$\frac{W_z}{Z} = \text{const.}$$

on doit choisir pour la valeur constante, entre 0,3 et 0,4.

3. Procédé selon la revendication 2, caractérisé en ce qu'en utilisant du ciment Portland, on doit choisir pour l'égalité (3) une valeur de 0,3.